# FASCICULE DE BREVET EUROPEEN

(11) **EP 0 580 850 B1**
(45) Date de publication et mention de la délivrance du brevet: **27.05.1998**
(21) Numéro de dépôt: 93905386.4
(22) Date de dépôt: 11.02.1993
(51) Int. Cl.: F16M 11/42, B60P 3/00

(54) **VEHICULE AUTOMOBILE POUR PRISE DE VUES EN TERRAINS DIFFICILES**
GELÄNDEGÄNGIGES KRAFTFAHRZEUG FÜR BILDAUFNAHMNE
MOTOR VEHICLE FOR THE SHOOTING OF A FILM IN DIFFICULT AND HILLY GROUND

(30) Priorité: 14.02.1992 FR 9201714
(43) Date de publication de la demande: 02.02.1994
(73) Titulaire: CJNCB, Société Civile d'Inventeurs, 94000 Créteil (FR)
(72) Inventeur: CJNCB, Société Civile d'Inventeurs, 94000 Créteil (FR)
(74) Mandataire: Rinuy, Santarelli
(86) Numéro de dépôt international: FR9300143
(87) Numéro de publication internationale: WO9316322

(56) Documents cités:
- FR-A- 1 209 437
- FR-A- 2 356 872
- FR-A- 2 640 206
- GB-A- 2 021 800
- US-A- 2 447 667
- US-A- 3 334 848

## Description

L'objet de la présente invention est un véhicule automobile du genre communément appelé "tous terrains", apte à recevoir un dispositif de prises de vues et à en assurer la translation verticale.

Traditionnellement, les prises de vues nécessitant un déplacement terrestre d'une caméra et son élévation sur un axe vertical sont effectuées à l'aide des dispositifs suivants :

Le premier consiste en un chariot apte à rouler sur des rails sensiblement horizontaux ou sur une surface sensiblement plate, lisse et dure. Ce chariot peut être équipé d'un bras de levage articulé apte à supporter une caméra, un dispositif classique de contrôle d'azimut et de site et un ou deux opérateur(s). Ce procédé permet une bonne stabilité et une bonne horizontalité de la caméra. Il nécessite cependant beaucoup de moyens d'installation. De plus, il interdit toute modification ou prolongation imprévue du parcours de prises de vues et limite les possibilités de cadrage car les rails ou plaques jointives (destinées à niveler le terrain) risquent d'entrer dans le champs de visée. Ces restrictions s'appliquent également aux grues classiques ou télécommandées bien que leurs possibilités de translation et de rotation dans les 3 axes soient supérieures aux moyens pré-cités.

Le second consiste à installer une caméra, ses opérateurs et un dispositif classique ou télécommandé de contrôle d'azimut et de site de caméra ainsi qu'un bras de levage traditionnel sur un véhicule automobile de type classique (mais dont les superstructures ont été retirées pour ne pas gêner la prise de vues), pourvu en général d'une suspension classique très souple, d'un châssis de grandes dimensions et de pneumatiques larges et sous-gonflés. Un tel dispositif permet une gamme de vitesses plus étendue que celle offerte par un chariot mais c'est au prix d'une manoeuvrabilité réduite et d'un encombrement plus important. De plus, ce dispositif devient vite inutilisable quand on s'éloigne des surfaces routières pour lesquelles ledit véhicule a été conçu : Des vibrations et des chocs parviennent alors à l'objectif de prises de vues, les références horizontales de la caméra sont gravement perturbées et le véhicule ne peut franchir des obstacles ou des dénivelés fortement différenciés au droit de chaque roue sans risquer de renverser le matériel et l'équipe de tournage.

Un troisième dispositif connu fait un usage combiné d'un véhicule, d'une grue classique et de stabilisateurs gyroscopiques de caméra ou de constructions d'objectifs tendant à stabiliser gyroscopiquement le trajet optique de l'image enregistrée. Cette dernière technique a tendance à limiter les possibilités de contrôle du site et de l'azimut de la caméra. Elle est de plus inadaptée pour l'atténuation des mouvements parasites translationnels ou pour ceux affectant l'axe de rotation de l'objectif de la caméra. Leur mise en oeuvre sur un véhicule tous terrains implique un coût d'installation considérable.

Un autre dispositif traditionnel consiste en divers moyens de stabilisation de la caméra, assurant aussi son élévation réduite, qui peuvent être soit portés par leur opérateur muni d'un harnais, celui ci se déplaçant à pied ou embarquant sur des véhicules (cas n° 1) soit directement arrimés sur un véhicule (cas n° 2). Ces moyens dont le plus complet est décrit dans le brevet FR77 19622, comportent des dispositifs mobiles et translationnels et répondent à certains critères géométriques limitant le déplacement de la caméra, notamment sur l'axe vertical, à l'amplitude possible de leur propre translation. Dans le cas N° 1, les prises de vues réalisées de cette façon sont physiquement éprouvantes pour l'opérateur (en limitant ainsi sa productivité) et dangereuses, car il ne dispose en terrain difficile que de sa musculature et de son système proprioceptif de l'équilibre pour compenser sa propre instabilité. Dans ce cas, en effet, tout sanglage ou soutènement de l'opérateur portant déjà un harnais tend à entraver les possibilités de compensation de sa propre assiette ainsi que les angles selon lesquels il peut effectuer sa prise de vues. Dans le cas N° 2, la capacité desdits moyens à absorber des chocs est sérieusement perturbée à l'occasion de dévers, de pentes ou de virages serrés franchis par le véhicule car ils nécessitent pour bien fonctionner un rétablissement d'assiette sensible de leur point d'arrimage que ne peut offrir la fixation rigide à une superstructure du véhicule où à tout autre support solidement arrimé au châssis. Dans toutes les situations de roulage impliquant une perte importante d'horizontalité du véhicule, l'opérateur doit fournir un effort musculaire violent du bras et des épaules tendant à contre-carrer les brusques translations de masse de la partie flottante du dispositif dont le point d'accroche subit des déviations angulaires amplifiées proportionnelles à celles du châssis. Ces moyens de stabilisation peuvent même se briser si leurs masses viennent à ne plus être contrôlées par l'opérateur qui doit lui aussi assurer sa stabilité.

Le déposant a déjà proposé une invention permettant de résoudre une partie de ces problèmes, qui a fait l'objet d'un brevet délivré le 31 Janvier 1991 sous le N° FR-A-2.640.206. Ce brevet décrit un dispositif permettant de faire progresser un dispositif de prise de vues et le personnel nécessaire à son fonctionnement sur des terrains traditionnellement inaccessibles aux moyens classiques tout en offrant, même à très petite vitesse, une stabilité et un maintien de l'horizontalité et de la stabilité dudit dispositif, indépendamment du terrain sur lequel se déplace le véhicule. Il propose un véhicule du genre "tous-terrains" pour prise de vues comportant un châssis monté sur des roues, une plate-forme intermédiaire reliée au châssis par deux parallélogrammes déformables verticaux passant de part et d'autre des opérateurs ou assistants situés sur le châssis et adaptés à conférer à la plate-forme intermédiaire un débattement vertical tout en la maintenant parallèle au châssis, une plate-forme de support montée sur la plate-forme intermédiaire en sorte de pouvoir tourner autour d'un axe vertical, un harnais d'opérateur de caméra fixé en un point bas à cette plate-forme de support et en deux points hauts à un arceau solidaire de cette plate-forme, et un socle solidaire de cette plate-forme supportant un dispositif classique de contrôle d'azimut et de site de la caméra. L'amortissement des vibrations et la stabilisation du dispositif en configuration horizontale est assuré grâce au fait que les quatre roues sont reliées de manière indépendante au châssis avec mise en oeuvre de vérins spécifiques réglant la position de chaque roue en-dessous du châssis (il peut y avoir un châssis intermédiaire entre les roues et le châssis sur lequel sont montés les parallélogrammes déformables) et grâce au fait que la plate-forme est munie de dispositifs de suspension en assurant une bonne isolation ; c'est ainsi qu'il est proposé un ensemble de vérins interposés entre une partie basse de plate-forme solidaire des parallélogrammes déformables et une partie haute à laquelle l'arceau et la console précités sont fixés. Des capteurs d'inclinaison ou d'accélérationr donnent à un calculateur les mesures lui permettant de définir les commandes à appliquer aux divers actionneurs de stabilisation de la plate-forme.

L'inconvénient d'un tel dispositif selon l'invention antérieure du déposant est un coût de fabrication qui est élevé en raison de la complexité de sa fabrication industrielle.

L'objet de la présente invention est un dispositif qui offre des fonctions sensiblement équivalentes à l'invention antérieure du déposant pour un coût de réalisation très largement inférieur.

Plus précisément, la présente invention concerne un véhicule automobile comportant :
- un châssis suspendu,
- un ensemble mobile comportant un harnais adapté à recevoir un opérateur de prises de vues, un dispositif de prises de vues et un support pour ce dispositif de prise de vues, et
- des moyens de soutien pour relier l'ensemble mobile au châssis, comportant des moyens de pivotement autour d'un axe vertical,
ce véhicule étant caractérisé en ce que les moyens de soutien comportent un élément intermédiaire sensiblement vertical auquel l'ensemble mobile est suspendu par des moyens de suspension autorisant un débattement pendulaire suivant deux directions sensiblement horizontales et sensiblement orthogonales entre-elles, et en ce que les moyens de pivotement sont commandés indépendamment de la position du châssis.

Avantageusement, la plan des dites deux premières directions est situé à proximité et au-dessus du centre de gravité dudit ensemble mobile.

Avantageusement, lesdits moyens de réglage de la hauteur présentent un débattement entre une position haute et une position basse, l'opérateur étant debout en position haute et à genoux en position basse, les pieds de l'opérateur restant en contact avec le véhicule.

De préférence, ledit moyen de réglage de hauteur peut être commandé par l'opérateur de prises de vues.

*Les caractéristiques et avantages de la présente invention apparaîtront de manière plus détaillée dans la description qui va suivre de deux modes de réalisation de l'invention donnés pour exemples non limitatifs, en référence aux dessins annexés dans lesquels :*

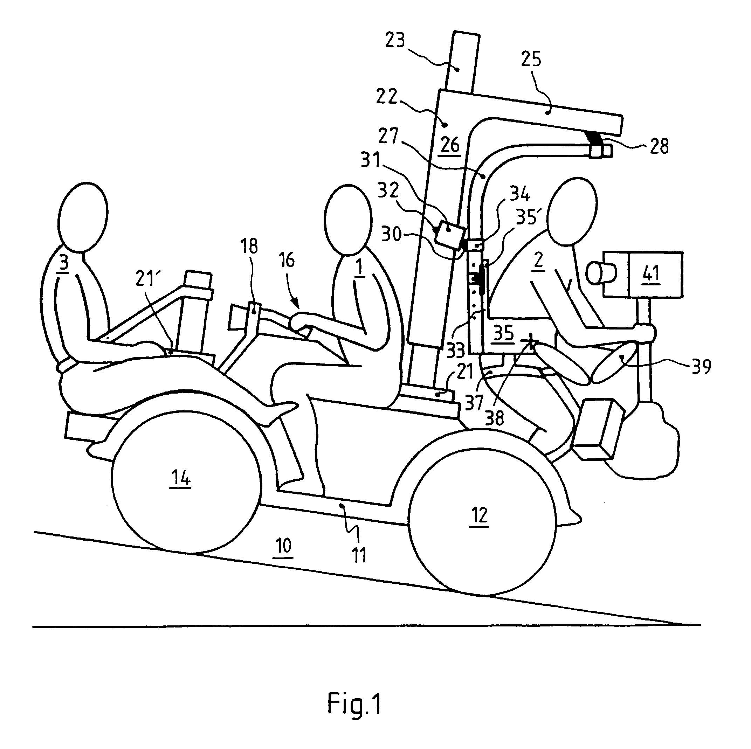

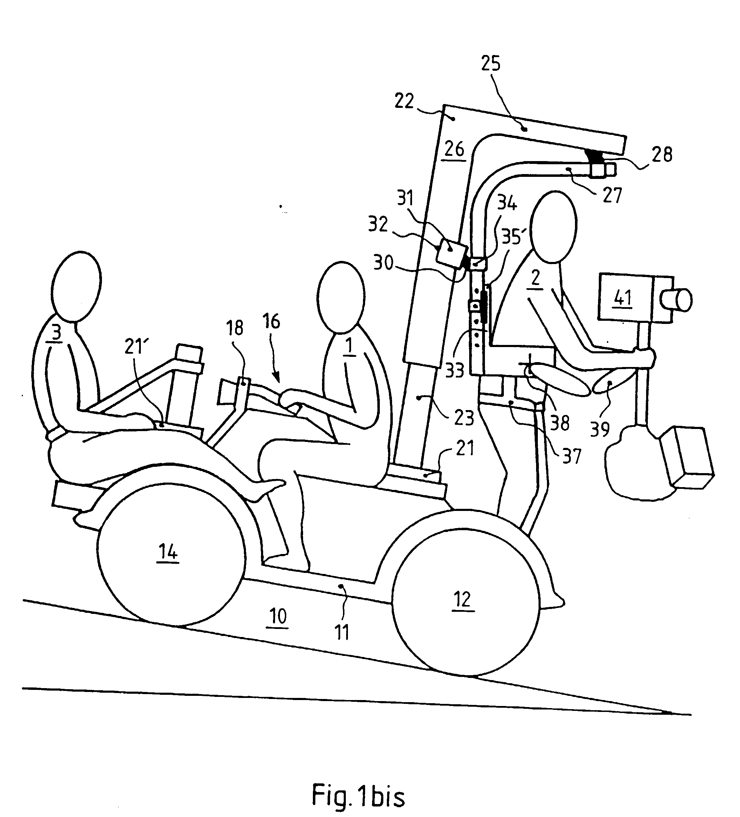

La **Figure 1** est une vue en élévation latérale d'un véhicule selon l'invention, suivant un premier mode de réalisation.

La **Figure 1 bis** est une vue en élévation latérale d'un véhicule selon l'invention, suivant un premier mode de réalisation, dans une position différente de celle représentée à la Figure 1

La **Figure 2** est une vue en élévation latérale d'un véhicule selon l'invention, suivant un premier mode de réalisation, dans une configuration différente de celle représentée aux Figures 1 et 1 bis.

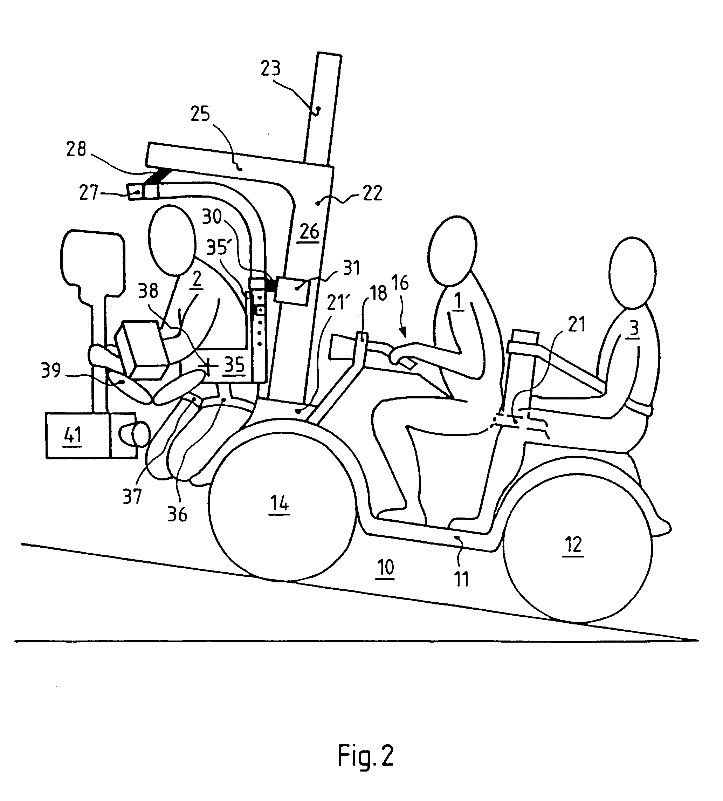

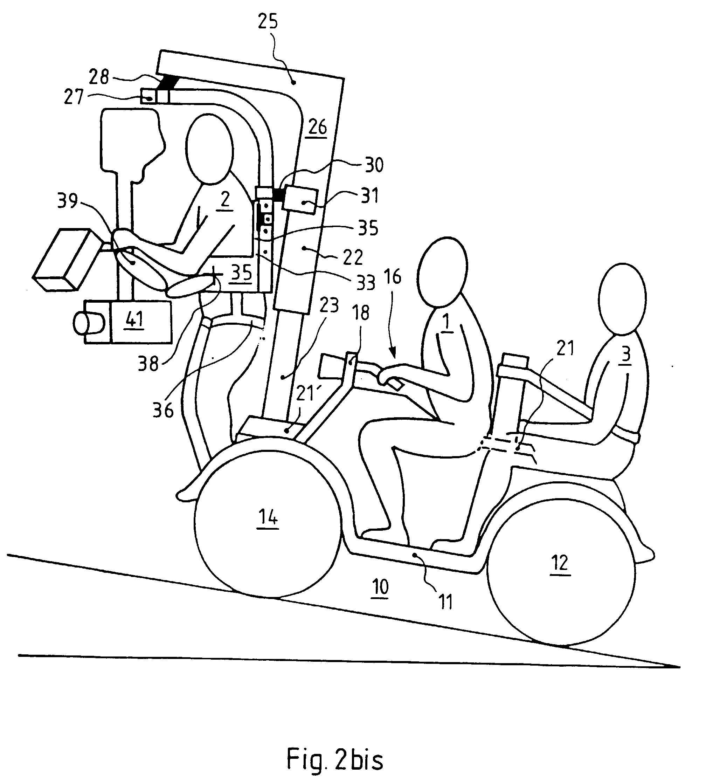

La **Figure 2 bis** est une vue en élévation latérale d'un véhicule selon l'invention, suivant un premier mode de réalisation, dans une position différente de celle représentée à la Figure 2.

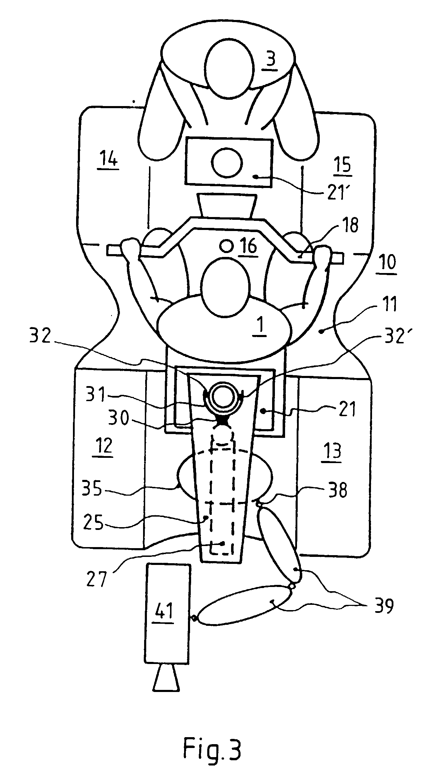

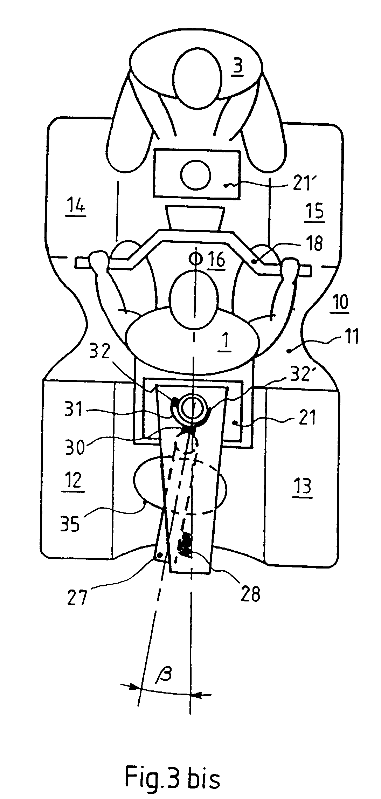

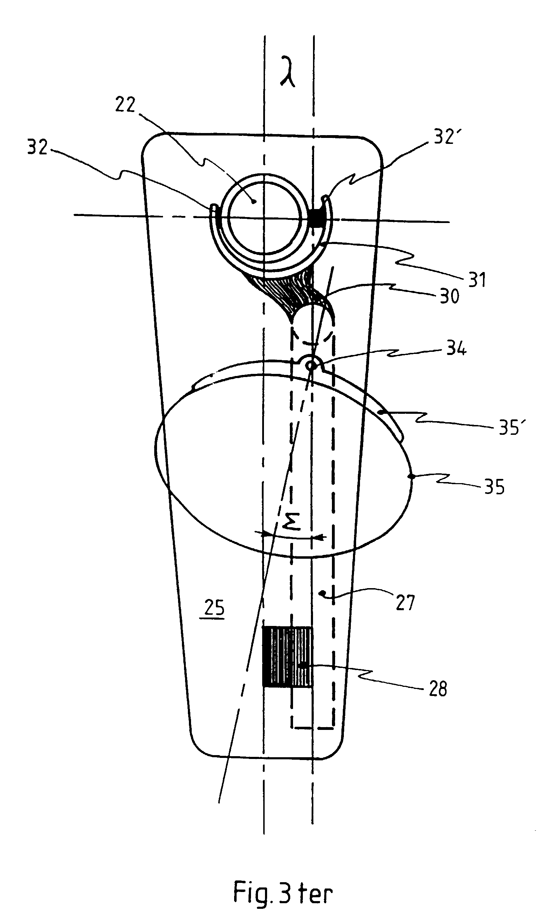

La **Figure 3** est une vue en plan d'un véhicule selon l'invention, suivant un premier mode de réalisation.

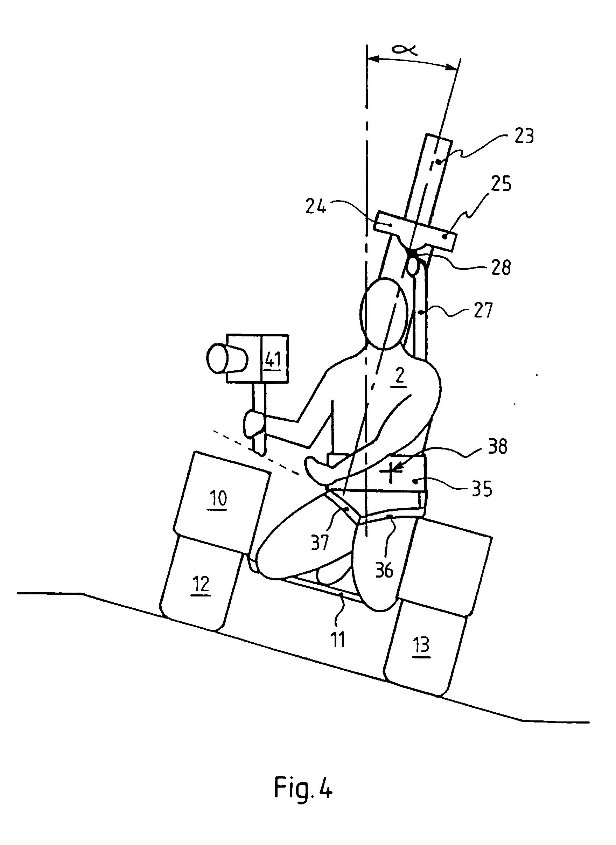

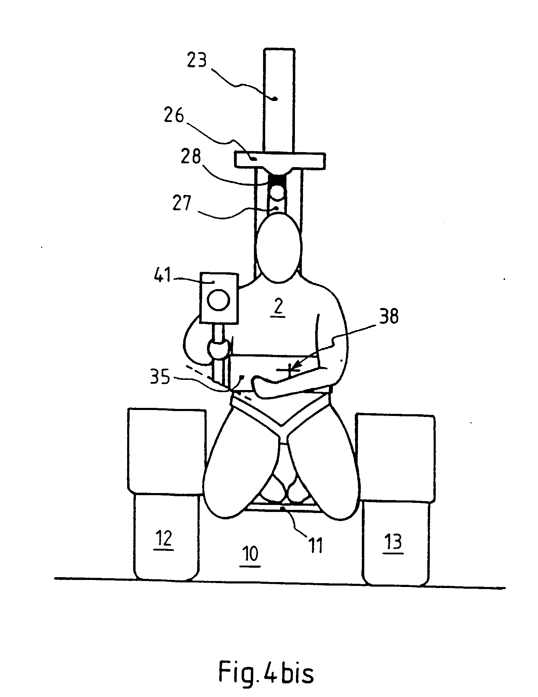

La **Figures 3 bis** est une vue en plan d'un véhicule selon l'invention suivant un premier mode de réalisation, dans une position différente de celle représentée à la Figure 3. La Figure 3 ter est une vue simplifiée en plan d'une partie d'un véhicule selon l'invention, suivant un premier mode de réalisation, dans une position différente de celles représentées aux Figures 3 et 3 bis mais correspondant au cas décrit par la Figure 4.

La **Figure 4** est une vue en perspective dorsale d'un véhicule selon l'invention, suivant un premier mode de réalisation.

La **Figure 4 bis** est une vue en élévation dorsale d'un véhicule selon l'invention, suivant un premier mode de réalisation, dans une position différente de celle représentée à la Figure 4.

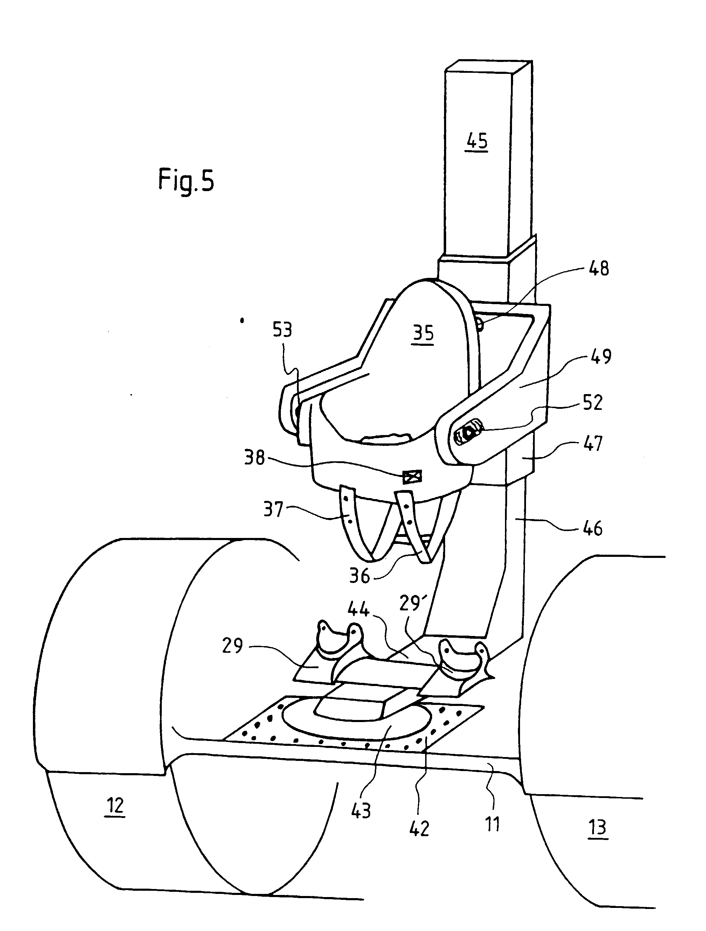

La **Figure 5** est une vue partielle en perspective d'un véhicule selon l'invention, suivant un deuxième mode de réalisation.

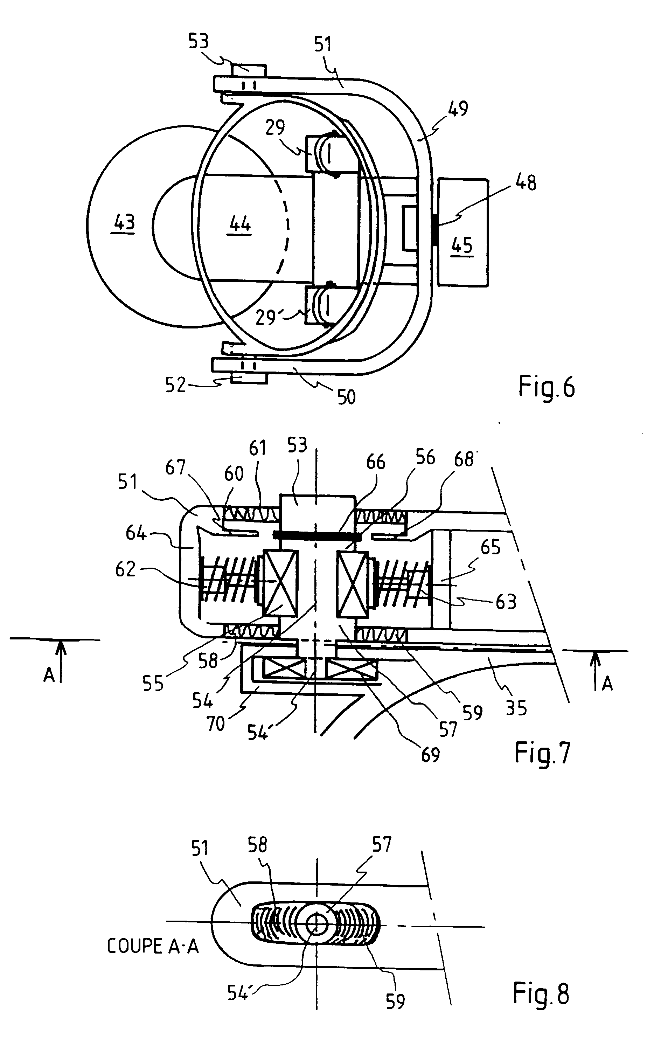

La **Figure 6** est une vue partielle en plan d'un véhicule selon l'invention, suivant un deuxième mode de réalisation.

La **Figure 7** est une vue en coupe et en plan d'un détail, illustrant une variante d'exécution d'un deuxième mode de réalisation de l'invention.

**La Figure 8** est une vue en élévation partielle du détail illustré par la Figure 7 d'une variante d'exécution d'un deuxième mode de réalisation de l'invention.

*Un premier mode de réalisation de l'invention va être décrit en référence aux Figures 1 à 4 bis.*

Elles représentent un véhicule [10] comportant un châssis [11], deux roues à l'arrière [12] et [13] et deux roues à l'avant [14] et [15].

Dans les deux modes de réalisation décrits à titre d'exemples, on a choisi un véhicule à quatre roues, mais il est également possible d'utiliser tout autre type de véhicule terrestre, amphibie, maritime ou à coussin d'air sans sortir du cadre de l'invention.

Le châssis [11] est connecté aux quatre roues [12], [13], [14], [15] par des suspensions classiques, non représentées. Avantageusement, on choisira des suspensions permettant une conduite sur tous terrains. De manière classique, le véhicule [10] est équipé d'un moteur (non représenté), d'un poste de conduite [16] destiné à un conducteur [1], de moyens de direction [18] aptes à orienter les roues avant [14] et [15], ainsi.que de moyens usuels d'accélération, de freinage, de changement de vitesse et d'embrayage (non représentés).

A l'arrière du véhicule [10], située légèrement en avant des roues arrière [12] et [13], se trouve une embase [21], solidaire du châssis [11], apte à recevoir un mât élévateur [22] comportant deux parties, l'une fixe [23] et connectée à l'embase [21], l'autre coulissante [24] venant s'emmancher par le dessus sur la partie fixe [23]. Dans le cas de mât coulissant [22] de section ronde, comme représenté sur les Figures, un dispositif de guidage évitant un pivotement relatif de ses éléments entre eux (non représenté) devra être prévu, ce qui n'est pas le cas pour des mâts coulissants de section rectangulaire qui pourront convenir aussi.

En variante d'exécution non représentée, on peut imaginer que le mât élévateur [22] comporte une embase fixe et une partie supérieure, ces deux parties étant reliées par un ou plusieurs vérins hydrauliques.

Le mât élévateur [22] est situé en position normale au châssis [11] mais peut, dans une autre variante d'exécution non représentée, former avec celui-ci un angle légèrement inférieur à quatre vingt dix degrés, de manière à ce que le haut du mât élévateur [22] soit plus près du centre du véhicule [10] que de l'embase [21].

La partie coulissante [24] du mât élévateur [22] peut s'élever par rapport à la partie fixe [23] par un coulissement de course limité. Le coulissement est mis en oeuvre par des moyens classiques, non représentés. Ceux-ci peuvent être, par exemple, electromécaniques (entraînement par pignon et chaîne, ou crémaillère) ou pneumatiques ou hydrauliques. En pratique, tous les types de mâts élévateurs peuvent convenir.

Au sommet du mât élévateur coulissant [22] est prévue une jambe de soutien [25] en saillie normale par rapport à l'axe de coulissement du mât [22]. La jambe de soutien [25] est disposée sensiblement dans le sens de la marche du véhicule [10].

L'ensemble constitué par le mât élévateur [22] et la jambe de soutien [25] forme une potence [26] apte à s'élever ou s'abaisser (Figures 1, 1 bis, 2 et 2 bis) dans des limites d'amplitude verticale définies par le coulissement du mât élévateur [22].

Des moyens de commande d'abaissement et d'élévation du mât élévateur [22] sont prévus, mais ne sont pas représentés. Avantageusement, on prévoira une commande manuelle, par exemple une poignée munie d'une gâchette reliée par un cordon conducteur à un dispositif de commande fixe, poignée qui sera préférentiellement solidaire d'un support [39].de dispositif de prise de vues [41]

Une sous potence [27] constituée, dans le mode de réalisation décrit, d'un tube coudé, est connectée à la potence [26] par deux silentblocs de soutien [28] et [30].

Le silentbloc de soutien [28] relie la partie supérieure de la sous-potence [27] (qui est en forme de L inversé) au dessous de la jambe de support [25]. Un deuxième silentbloc de soutien [30] relie l'autre partie, normale à la première, de la sous-potence [27] à un étrier intermédiaire [31] connecté par deux silentblocs [32] et [32'] à la partie coulissante [24] du mât élévateur [22]. Les deux silentblocs [32] et [32'] se font face de chaque coté du mât élévateur coulissant [22] dans un plan normal à la jambe de soutien [25], ainsi qu'on peut le voir en plan sur les Figures 3, 3 bis et 3 ter. Un tel dispositif peut, dans une variante d'exécution non représentée de l'invention, remplacer le silentbloc [28] sur la jambe de soutien [25]. Pour renforcer la sécurité en cas de défaillance d'une accroche, on peut également remplacer l'étrier intermédiaire [31] par une couronne (non représentée) entourant totalement la jambe de soutien [25] et comportant sur sa surface interne au minimum un couple de silentblocs (non représentés) disposés de manière identique aux [32] et [32'].

L'homme de l'art aura à choisir la dureté et le coefficient d'amortissement interne des silentblocs déjà cités afin que le silentbloc [28] puisse permettre le portage de la sous-potence [27] tout en offrant une liberté limitée de déviation angulaire par rapport à la jambe de soutien [25]. Ceci s'applique aussi aux silentblocs [30], [32] et [32'] qui auront à fournir un effort de maintien de la sous potence [27] tout en lui laissant quelques degrés de liberté par rapport au mât élévateur [22]. Il pourra, sans sortir du cadre de l'invention, dédoubler le silentbloc [28] le long de la jambe de soutien [25], s'il souhaite renforcer le portage en restreignant cependant les mouvements autonomes possibles de la sous-potence [27]. S'il souhaite, au contraire, augmenter les déplacements relatifs et déviations angulaires possibles de ladite sous-potence par rapport à la jambe de soutien [25], il pourra remplacer le silentbloc [28] par un dispositif similaire à la conjonction de l'étrier [31] et des silentblocs [30, 32, 32']

Tout moyen de soutien de la sous-potence [27] autre que les silentblocs déjà cités rentre dans le cadre de l'invention, à condition qu'il conjugue le portage de ladite sous-potence chargée des poids qui lui sont accrochés (voir plus loin dans la description) avec une liaison présentant un quelconque degré d'amortissement et une élasticité suffisante pour permettre un débattement limité du positionnement de [27] par rapport à la jambe de soutien [26] d'une part, et par rapport au mât élévateur [22] d'autre part. Ceci est notamment le cas de liaisons rotulaires freinées à raideur variable comportant, par la structure de leur matériau, un facteur d'élasticité ou de combinés ressorts-amortisseurs à compression réglable.

A la sous-potence [27] est connectée un harnais [33] disposé de manière à recevoir un opérateur [2] qui se trouve dos au mât élévateur coulissant [22]. De cette manière, en position de repos, l'opérateur regarde vers l'arrière du véhicule, comme représenté aux Figures 1 et 1 bis,.

En variante d'exécution non impérative mais représentée sur les Figures 2 à 3 bis, un poste de travail est prévu pour un assistant de prise de vues [3] à l'avant du véhicule [10]. Une deuxième embase [21'] apte à recevoir le mât élévateur [22] est située devant le poste de conduite [16]) et en alignement avec l'embase [21] suivant la direction d'avancement du véhicule [10]. Lorsque le mât [22] est fixé à l'embase [21'], l'opérateur [2] se trouve à l'avant du véhicule [10], dos au mât élévateur [22], et regarde en position de repos vers l'avant du véhicule. L'assistant [3] permute alors son poste de travail à l'arrière du véhicule [10], de l'autre coté du conducteur [1] (Figures 2 et 2 bis).

Le harnais [33] comporte une ceinture rigide [35], prolongée, à son arrière et en saillie vers le haut, d'un dosseret [35'] qui se connecte, dans ce premier mode de réalisation de l'invention, à la partie verticale de la sous-potence [27] par l'intermédiaire d'un moyen charnière freiné [34] dont la partie fixe forme collier avec la sous-potence [27] et dont l'axe de pivotement est parallèle à sa partie verticale et le plus proche possible de celle-ci. On peut prévoir soit une charnière simple freinable par vis (ou par tout autre dispositif connu) suffisamment longue pour assurer sans risque de torsion une jonction le long du dosseret [35'] soit, préférentiellement, des moyens partiellement élastiques tels qu'un couple de silentblocs verticalement superposés par exemple à vingt centimètres l'un de l'autre ou un silentbloc suffisamment oblong ou tout autre moyen autorisant une résistance à la rotation et la limitant. La course de pivotement du moyen charnière [34] décrit, ne doit permettre la rotation du dosseret [35'] (et donc de l'ensemble du harnais [33]) que sur une dizaine de degrés, valeur qui peut être encore réduite par des butées réglables (non représentées).

Il est important de prévoir différents points de fixation possibles du moyen charnière [34] (et donc du harnais [33]) le long de la partie verticale de la sous potence [27] située sous le silentbloc [30], afin de disposer d'une possibilité de réglage relatif des degrés de liberté de ladite sous-potence par rapport à la potence [26] par un contrôle de l'éloignement des charges appliquées au harnais [33] par rapport aux moyens de soutien [28, 30, 32 et 32']. Des opérateurs de poids et de tailles variées peuvent ainsi adapter leur positionnement aux exigences de la prise de vues envisagée

Sur une partie opposée au-moyen charnière [34], la ceinture [35] comporte un point d'accroche [38] apte à recevoir un support de dispositif de prise de vues [39] et un dispositif de prises de vues [41].

Avantageusement, le support [39] du dispositif de prise de vues est constitué d'un bras articulé comportant au moins un parallélogramme déformable (non représenté).

Plus précisément, le support [39] du dispositif de prise de vues comprend au moins une paire de bras reliés entre eux de façon pivotante, des moyens d'accouplement en rotation d'une extrémité desdits bras à un support, des moyens permettant de relier à un poids l'autre extrémité desdits bras et des moyens élastiques prévus sur chacun des bras destinés à compenser le poids appliqué à l'extrémité de chacun de ces bras. Un tel support de dispositif de prise de vues est d'ailleurs bien connu de l'homme de l'art et a fait l'objet d'une commercialisation sous la marque "Steadycam". Il est schématisé sur les Figures 1 à 2 bis et, de manière encore plus partielle, sur les Figures 4 et 4 bis à titre d'exemple non limitatif d'un support [39] d'un dispositif de prise de vues [41].

Il est connu que le point d'accroche [38] d'un support [39] du type de celui représenté à titre d'exemple dans les Figures doit se trouver, pour qu'il fonctionne dans des conditions idéales, sur l'un des cotés ventraux d'un harnais (non représenté) prévu pour le cameraman, (harnais équivalent à la ceinture rigide [35]), de manière à ce que ce que le support [39] évolue dans la zone située sous l'un quelconque des bras de celui-ci, dont il constitue un double articulé assurant le maintien en flottaison contrôlée de la caméra [41] Comme le coté choisi est indifférent pour le fonctionnement de l'invention, la même référence [38] couvre indifféremment une accroche latérale à droite du tronc de l'opérateur [2] (Figures 1 et 1 bis) ou à sa gauche (Figures 2, 2 bis, 3, 3 bis, 4 et 4 bis). Les positions d'accroche illustrées ne dépendent que de la commodité du dessin. L'homme de l'art peut prévoir deux points d'accroche [38] pré-installés ou une platine intermédiaire retournable et symétrique comportant un seul point d'accroche [38]. Il pourra choisir tout autre emplacement sur la ceinture [38], si un autre type de support [39] est utilisé, sans incidence sur l'invention.

De préférence, le châssis [11] et les superstructures du véhicule [10] seront évidés dans la zone où se trouvent les genoux de l'opérateur [2] quand il est dans la position la plus basse permise par le mât élévateur coulissant [22], afin que le support [39] et le dispositif de prise de vues [41] puissent évoluer sans entrave

Des étriers de maintien [29] et [29'] (schématisés sur les Figures 5 et 6 qui décrivent un second mode de réalisation de l'invention) des chevilles de l'opérateur [2], avantageusement connectés à des charnières bloquables en position souhaitée, et disposées comme des starting-blocks sont à prévoir si les superstructures du véhicule [10] n'offrent pas de point d'accroche suffisant. Avantageusement, ils seront disposés légèrement en arrière afin de permettre qu'en position basse l'opérateur [2] puisse avoir les genoux dans le vide sans effort particulier.

La ceinture rigide [35], apte à enserrer la taille de l'opérateur [2], comporte des moyens d'ouverture et de fermeture classiques permettant une mise en place rapide, ainsi que des moyens d'adaptation de son diamètre (non représentés). Deux sangles de soutien [36] et [37] sont prévues pour y maintenir l'opérateur [2] et assurer un réglage précis en hauteur de sa position dans la ceinture rigide [35]: Il pourra ainsi être en contact avec celle-ci, au choix, par la partie inférieure ou médiane de son tronc. De manière préférentielle, on utilisera pour assurer le soutien de l'opérateur [2] à l'intérieur de la ceinture [35] un sanglage autorisant une flexion totale des jambes et une répartition équilibrée du poids du corps.

Il est souhaitable de pouvoir en partie contrôler les différentes déviations de la sous-potence [27] (permises par l'ensemble des silentblocs déjà cités et exercées par l'opérateur [2] en fonction du poids total supporté par le harnais [33]) d'une part grâce au réglage de l'enfoncement de son corps à l'intérieur de la ceinture rigide [35], position pouvant s'ajuster par le réglage des sangles [36] et [37] et également grâce au maintien du contact de ses pieds avec le châssis [11] au moyen des étriers [29 et.29']

L'ensemble constitué par l'opérateur [2], le harnais [33], le support [39] du dispositif de prise de vues [41] ainsi que par ce dernier est un ensemble dit mobile comportant un centre de gravité variable (non représenté). Il est important de prévoir que le silentbloc de soutien [30] et le moyen charnière freiné [34] soient placés au dessus du plan horizontal le plus haut formé par les translations de ce centre de gravité, quelle que soit la position dans l'espace du dispositif de prise de vues [41]. Il est également souhaitable que la position du silentbloc [28] soit la plus proche possible d'une position à l'aplomb du plan ainsi défini.

*Les éléments principaux caractérisant le véhicule [10] selon un premier mode de réalisation de l'invention ont été décrits. Le fonctionnement de ces éléments va maintenant être décrit en référence aux Figures 1 à 4 bis.*

Le véhicule [10] représenté est du genre automobile et comporte quatre roues [12], [13], [14], [15]. Un conducteur [1] est installé au poste de conduite [16]. Lorsque le véhicule [10] est mû par son moteur, le conducteur [1] utilise un moyen de direction [18], des moyens de freinage et d'accélération (non représentés) ainsi que d'autres moyens traditionnels tels qu'embrayage et boite de vitesse (non représentés) s'il est jugé utile de les prévoir.

L'opérateur de prise de vues [2] est installé dans le harnais [33], enserré par la ceinture rigide [35]. Lorsque la potence [26] est en position basse (comme par exemple dans les Figures 2, 4 et 4 bis), l'opérateur [2] est dans une position quasi à genoux, bien que ne reposant pas sur ses genoux, car il est suspendu par le harnais [33]. Lorsque la potence (26] est en position haute (ce qui est presque le cas à la Figure 1 bis), le harnais [33] soulève l'opérateur qui se trouve alors quasiment debout, ses pieds restant en contact avec le châssis [11] par l'intermédiaire des étriers de maintien [29] et [29'] de ses chevilles. Avantageusement, la commande d'élévation (non représentée) du mât élévateur coulissant [22], qui détermine ainsi la position de l'opérateur [2], se fait par une poignée, à portée de main de l'opérateur [2], préférentiellement solidaire du support [39] de dispositif de prise de vues.

Chacun des silentblocs cités dans la description sert à filtrer une partie des chocs et vibrations qui affectent le châssis [11] lors de la progression du véhicule [10] sur un terrain inégal.

La sous-potence [27] peut, dans la limite de la flexibilité desdits silentblocs, se déplacer par rapport à la potence [26] par un mouvement de translation latérale ou longitudinale et / ou changer son orientation par rapport à celle-ci par une déviation angulaire

A la Figure 3 bis, un angle "β" représente, dans ce premier mode de réalisation, une valeur maximum possible de déviation angulaire de la sous-potence [27] par rapport à la potence [26] (et donc à l'axe longitudinal du châssis [11]). Elle est déterminée par l'élasticité des silentblocs [28] et [30], par leur éloignement respectif du coude formée par la sous potence [27], ainsi que par l'élasticité du couple de silentblocs opposés axialement [32] et [32'].

En pratique, la valeur angulaire "β" représentée par la Figure 3 bis, peut différer, au niveau du point d'accroche [38] car la fixation de la ceinture rigide [35] à la sous-potence [27] par le moyen charnière freiné [34] autorise une autre déviation angulaire commandée par l'opérateur [2] de la direction générale de l'ensemble mobile par rapport au plan défini par la sous-potence [27]. Une telle rotation de valeur angulaire "Σ" est représentée sur la Figure 3 ter, correspondant au pivotement constaté sur la Figure 4. Ce débattement qui s'effectue dans un plan normal à la partie descendante de la sous-potence [27], est freiné et limité (par des butées réglables non représentées).et interdit tout basculement dans le sens avant-arrière de l'opérateur [2] autre que le mouvement pendulaire permis par l'ensemble des silentblocs déjà cités.

La Figure 3 ter indique, toujours dans ce premier mode de réalisation, une valeur maximum possible "λ" de déplacement relatif des mêmes éléments entre eux. Cette Figure fait schématiquement référence à une situation de dévers simple rencontrée par le véhicule [10] et illustrée par la Figure 4.

D'une manière générale, l'amplitude maximum de ladite translation (qu'elle soit latérale ou longitudinale) dépend de l'espace libre entre la potence [26] (constituée de [25] et [22]) et la sous-potence [27], ainsi que de la dimension et du coefficient d'élasticité des différents silentblocs déjà cités. Les Figures 1 à 2 bis concernant des prises de vues sur un parcours en pente, donnent des exemples de translation longitudinale des divers moyens de soutien de l'ensemble mobile, en particulier par la rétraction le long de la potence [26] de l'étrier [3l].ou au contraire son écartement. L'opérateur [2] n'intervient pas de manière volontaire pour compenser ces variations de gradient qui rendraient l'utilisation du support [39] de caméra [41] périlleuse si celui-ci était fixé de manière rigide au véhicule [[10]. Il n'a pas à ramener le support [39] à portée d'utilisation par des efforts musculaires intenses dommageables à la qualité et à la sécurité de son travail. Il peut se consacrer à sa prise de vues, sans se soucier du terrain.

Les Figures 4 et 4 bis représentent deux positions du véhicule progressant respectivement avec un dévers latéral et à plat. Dans le cas de la Figure 4, l'ensemble mobile pivote autour de la jambe de soutien [25], tendant à conserver la plus grande verticalité possible. La torsion du silentbloc [28] et la torsion des silentblocs [30], [32] et [32'] (non visible), permet une déviation angulaire "α" entre l'axe normal au plan de la ceinture [35] et la potence [26], autorisant une quasi-verticalité de l'ensemble mobile. L'opérateur [2], dans ce cas, en association avec le mouvement pendulaire qu'il subit lui même, s'appuie instinctivement sur sa jambe située du coté de la pente, aidant au rétablissement de l'assiette de l'ensemble mobile dont le centre de gravité se trouve sensiblement en dessous du silentbloc [28] (Figure 4). Que le véhicule [10] soit penché en avant ou en arrière ou latéralement, suivant le terrain, de tels mouvements de compensation d'assiette sont facilités par le fait que la sous-potence [27] est partiellement libre d'osciller de façon pendulaire.

L'opérateur [2] gardant ses pieds en contact avec le châssis [11], ressent les inclinaisons variées du véhicule [10] qui dépendent du terrain franchi, des accélérations ou freinages brusques et de la présence de virages serrés. Il peut contrarier.de telles pertes d'horizontalité par des mouvements de son bassin exerçant une poussée ou une traction sur la ceinture rigide [35] ou sur le dosseret [35'],.par une poussée de ses jambes sur les étriers [29 et 29'], par des prises d'appui de ses mollets sur des superstructures latérales du véhicule [10] ou au contraire par une flexion limitée de ses jambes et un tassement de son corps sur les sangles de soutien [36] et [37]. Il peut ainsi compenser, à la fois de manière volontaire par de petites contre-actions limitées, et de manière naturelle en se laissant aller dans son harnais porteur [35], tout transfert de charge intempestif entraînant un manque d'assiette transitoire du point d'accroche [38] du support de dispositif de prise de vues [39], qui pourrait gravement perturber son bon fonctionnement.

Le rattrapage même partiel de la verticalité d'une partie des masses embarquées permet la mise en oeuvre d'un véhicule étroit à polygone de sustentation plus réduit, ce qui présente des avantages connus pour la prise de vues, notamment par la possibilité d'offrir un champs plus étendu à la caméra.

Ainsi, globalement, l'ensemble mobile peut suivre un mouvement pendulaire limité tendant à lui donner la plus grande verticalité possible, un mouvement de pivotement angulaire par rapport à la direction de marche du véhicule et un mouvement d'élévation ou d'abaissement par rapport au châssis.

L'opérateur contrôle les mouvements pendulaires instinctivement et sans efforts importants, à l'aide de ses jambes restant en contact avec le châssis.

Le mouvement de pivotement angulaire (par exemple celui de valeur "Σ" représenté aux Figures 3 ter et 4) est commandé naturellement par l'opérateur [2] lorsque celui-ci se dirige son bassin vers l'objet de sa prise de vues.

Le mouvement vertical est commandé volontairement par l'opérateur, à l'aide d'une commande prévue à cet effet.

Le premier mode de réalisation de l'invention présente en outre l'avantage d'une grande simplicité de mise en oeuvre et par là-même d'un coût réduit.

*Un deuxième mode de réalisation de l'invention va maintenant être décrit, en référence* aux *Figures 5,* 6, *7 et 8. Les éléments communs aux deux modes ont gardé le même numéro d'identification.*

La Figure 5 représente une vue partielle en perspective d'un véhicule selon un deuxième mode de réalisation de l'invention. Au châssis [11] est connectée une embase [42] comportant un plateau tournant [43] faisant office de pivot.

Un bras de support [44], fixé solidairement au plateau tournant [43] est en saillie radiale de celui-ci.

Un mât élévateur coulissant [45] est connecté au bras de support [44] à son extrémité extérieure au plateau tournant [43] et s'étend normalement par rapport au plan du châssis [11]. Le mât élévateur coulissant [45] comporte deux parties, l'une dite de référence [46] qui est connectée au bras de support [44], l'autre dite coulissante [47] de section transversale supérieure qui vient s'emmancher sur la partie de référence [46]. Dans l'exemple de réalisation présenté, le mât élévateur coulissant [45] présente une section transversale rectangulaire. Celle-ci peut être quelconque, sans incidence particulière sur l'invention. Si l'on envisage de réaliser, dans le cadre de l'invention, un mât élévateur coulissant de section ronde, des moyens de guidage devront être prévus pour éviter un pivotement relatif de l'élément coulissant [47] par rapport à l'élément de référence [46].

Le débattement axial de l'élément [47] par rapport à l'élément de référence [46] est commandé par des moyens classiques electromécaniques, électropneumatiques, hydrauliques, sans que cette liste soit limitative. Ces moyens seront avantageusement disposés à l'intérieur du mât élévateur coulissant [45] et ne sont pas représentés sur les Figures.

Ce débattement axial sera limité par une position haute maximum et une position basse maximum dont les caractéristiques seront données ci-après.

Avantageusement, le bras élévateur comportera des moyens amortisseurs aptes à filtrer des vibrations et chocs du châssis. Ceci est classique dans le cas d'un bras élévateur hydraulique.

A la partie supérieure de l'élément coulissant [47], et dirigé normalement à l'axe de coulissement, est disposé un pivot [48] (Figures 5 et 6) qui connecte de façon pivotante l'élément [47] à une fourche [49]. Le pivot [48] autorise un pivotement de la fourche [49] suivant un axe parallèle au bras de support [44]. La fourche [49] comporte deux bras coudés [50] et [51] s'étendant depuis le pivot [48] dans un plan parallèle au bras de support [44] et dans une direction opposée à la saillie que celui-ci constitue par rapport au plateau tournant [43]. Les bras [50] et [51] sont coudés avec un angle arrondi dans le mode de réalisation illustré. Ils peuvent indifféremment être courbés ou présenter toute autre forme que l'homme de l'art pourra juger appropriée. Les bras [50] et [51] présentent chacun une extrémité libre qui comprend un pivot, respectivement [52] et [53], pivots alignés suivant un axe normal à l'axe du pivot [48], de manière que l'ensemble constitué par le bras de levage [45] et la fourche [49] constitue un cardan.

Une ceinture rigide [35], élément constituant d'un harnais, du même genre que la ceinture rigide de même référence figurant dans le premier mode de réalisation de la présente invention, est fixée latéralement au deux pivots [52] et [53]. Sur les Figures 5 et 6, la ceinture [35] comporte le schéma d'emplacement du point d'accroche [38] d'un support de dispositif de prise de vues. Le support de dispositif de prise de vues et le dispositif de prises de vues, connus en soi et identiques à ceux mentionnés ci-avant dans la description du premier mode de réalisation, ne sont pas représentés aux Figures 5 et 6. Deux sangles [36] et [37] formant harnais permettent de soutenir un opérateur (non représenté) enserré dans la ceinture [35].

La disposition de la ceinture [35] dans la fourche [49] est telle que l'axe des pivots [52] et [53] passe au dessus du centre de gravité de l'ensemble mobile (non représenté) constitué par l'opérateur, le support de dispositif de prises de vues et le dispositif de prise de vues, cet axe se trouvant aussi proche que possible de l'aplomb de ce centre de gravité. En pratique, le centre de gravité est variable selon le poids de l'opérateur et selon la position du dispositif de prise de vues relativement à la ceinture [35]. Si l'axe des pivots [52] et [53] se trouve à proximité et au dessus du centre de gravité de l'ensemble mobile, les variations de position de ce centre de gravité n'affectent pas significativement le fonctionnement de l'invention. Il est néanmoins important que ledit centre de gravité se trouve au dessous de l'axe des pivots [52] et [53] et également en dessous de l'axe du pivot [48].

La distance entre l'axe des pivots [52] [53] et le pivot [48] est déterminée de manière que l'axe de pivotement du plateau tournant [43] passe approximativement par le centre de gravité de l'ensemble mobile, d'une part et permette un dégagement suffisant des jambes et de la tête de l'opérateur relativement au mât [45].

De préférence, l'axe de rotation du plateau tournant [43] passe exactement par le centre de gravité de l'ensemble mobile. En pratique, celui-ci étant variable, on peut en déterminer une moyenne statistique et positionner les pivots [52] et [53] de manière que cette condition soit réalisée.

Dans un mode de réalisation économique peu adapté aux prises de vues en tous terrains, le plateau tournant [43] peut être libre en rotation, comportant un pivot sur palier. Dans ce cas, l'opérateur en commande les pivotements directement avec ses jambes, ses pieds reposant sur le châssis [11]. Pour éviter les rotations intempestives provoquées par des chocs intervenant lors de la progression du véhicule sur un parcours accidenté, un freinage du pivotement du plateau tournant [43] doit être prévu.

Préférentiellement, le plateau tournant [43] est entraîné en rotation, par exemple à l'aide d'un moteur électrique (non représenté). Sur le bras de support [44], deux étriers de maintien [29] et [29'], identiques à ceux décrits dans le premier mode de réalisation, accrochent les pieds de l'opérateur par un sanglage de ses chevilles et lui offrent, par leur inclinaison réglable, un point d'appui et de poussée variable pour réagir aux diverses inclinaisons du véhicule [10], aussi bien pour la position debout que pour celle à genoux, car il ne se sert pas de ses membres pour actionner la rotation du plateau [43].

L'entraînement en rotation du plateau [43] peut être commandé de manière volontaire par l'opérateur, à l'aide d'un dispositif de commande connu en soi.

Dans une variante préférentielle d'exécution du mode de réalisation de l'invention, le plateau tournant [43] peut être entraîné en rotation par des mouvements instinctifs du corps de l'opérateur [2]. La Figure 7 présente en coupe le bras [51], réalisé suivant cette variante d'exécution. Le pivot [53] comporte un arbre principal [54] reposant sur un palier cylindrique [55]. Le palier [55] peut être un coussinet, un roulement à billes ou à rouleaux, suivant le choix de l'homme de l'art. L'arbre principal [54] est délimité par deux disques concentriques [56] et [57], chacun situé à une de ses extrémité et servant de cales et de points de support.

Comme le montre la Figure 8, le disque [57] se loge dans une échancrure oblongue [58] ménagée dans le bras [51]. De même, le disque [56] se loge dans une échancrure oblongue [60], de l'autre coté du bras [51] (Figure 7). Les disques [56] et [57] peuvent ainsi se déplacer dans les échancrures [58] et [60] suivant la direction générale du bras [51]. Avantageusement, des flasques souples [59] et [61] relient les échancrures [58] et [60] aux disques [56] et [57] pour isoler l'intérieur du bras [51] de l'extérieur. Ceci permet d'éviter l'encrassement du palier [55]. Le palier [55] est enserré dans deux ensembles comportant chacun un ressort et un amortisseur concentriques, respectivement [62] et [63]. Ces deux ensembles sont diamétralement opposés par rapport au palier et sont alignés avec l'axe général du bras [51]. A leur extrémité opposée au palier, ils sont fixés à une butée, respectivement [64] et [65]. Ainsi, l'ensemble du pivot [53] peut coulisser suivant une direction alignée avec l'axe général du bras [51]. Ce coulissement est cependant amorti, contraint par la force des ressorts et limité par la longueur des échancrures [58] et [60].

Une bague [66] est montée coaxialement au pivot [53], réalisée en matériau conducteur et connectée à une tension électrique. Deux butées conductrices [67] et [68] sont disposées de part et d'autre de la bague [66], de manière que, lorsque la bague se déplaçant avec le pivot vient en contact avec l'une des butées, la tension électrique passant par une butée ou par l'autre actionne la rotation du plateau tournant [43] dans une direction ou dans l'autre, respectivement.

Dans une variante d'exécution, on pourra substituer des capteurs de pression aux butées conductrices [67] et [68]. Dans ce cas, il n'est pas nécessaire de mettre sous tension la bague [66], qui peut être réalisé en tout matériau mécaniquement approprié. L'avantage des capteurs de pressions est leur capacité à fournir un signal proportionnel à la pression mécanique qu'ils enregistrent. Ainsi, il est possible de commander la rotation du plateau tournant [43] avec une vitesse de rotation proportionnelle à la pression enregistrée. Des capteurs de pression de type, par exemple, piézo-électriques peuvent être utilisés.

L'arbre principal [54] du pivot [53] se prolonge vers l'intérieur de la fourche [49] par une saillie axiale [54'] dépassant le disque [57]. La saillie axiale [54'] comprend une gorge constituée d'une réduction de diamètre sur une partie de sa longueur, gorge enserrée dans un palier [69] fixé par des moyens de fixation [70] à la ceinture rigide [35]. Les moyens de fixation [70] constituent une saillie rigidement connectée à la ceinture [35] disposés de manière que l'axe du pivot [53] ait la position souhaitée par rapport au centre de gravité de l'ensemble mobile.

Avantageusement, on pourra prévoir des moyens de réglage de la position relative du pivot [53] et de la ceinture [35], de manière que des opérateurs de taille et de poids différends puissent travailler dans les meilleures conditions. Le pivot [52], son arrangement dans le bras [50], et ses moyens de fixation à la ceinture [35] sont exactement les mêmes que ceux décrits pour le pivot [51], mais disposés symétriquement par rapport au plan du bras de support [44] et du mât élévateur coulissant [45].

*Les éléments constituant un deuxième mode de réalisation de l'invention ont été décrits. Le fonctionnement de l'invention suivant ce mode de réalisation se produit comme suit (Figures 5 à 8).*

L'opérateur prenant place dans la ceinture [35] est soutenu de façon complémentaire par les sangles [36] et [37], la ceinture et les sangles formant harnais.

Les pivots [52] et [53] situés au dessus du centre de gravité de l'ensemble mobile donnent un équilibre pendulaire tendant à restaurer la verticalité de l'ensemble mobile, suivant une direction avant-arrière par rapport à l'opérateur.

Le pivot [48], situé également au dessus du centre de gravité de l'ensemble mobile, donne un équilibre pendulaire tendant à restaurer la verticalité de l'ensemble mobile suivant une direction latérale à l'ensemble mobile (par rapport à l'opérateur).

Ainsi, lors de la progression du véhicule sur un terrain non horizontal, l'ensemble mobile garde une position globalement verticale. De plus, le centre de gravité du véhicule n'est que légèrement déplacé par le mouvement pendulaire de l'ensemble mobile, et ce déplacement tend à favoriser l'assiette du véhicule.

Les quelques déviations de la position de l'ensemble mobile par rapport à ce que souhaite immédiatement l'opérateur peuvent être rectifiées immédiatement et instinctivement par celui-ci, qui reste en contact par ses pieds avec le châssis [11] (par l'intermédiaire du plateau tournant [43] et du bras support [44]), grâce à son sens proprioceptif de l'équilibre.

Lorsque le véhicule prend un virage, l'ensemble mobile étant apte à pivoter suivant un axe passant approximativement par son centre de gravité, aucune force centrifuge importante ne tend à entraîner un tel pivotement .

Lorsque l'opérateur, pour exécuter des prises de vues, souhaite s'orienter vers une direction autre qu'en alignement avec celle de la marche du véhicule, il peut entraîner le plateau tournant [43] en pivotement de plusieurs façons, suivant les variantes d'exécution de l'invention qui ont été mises en oeuvre.

Dans un premier mode d'exécution rudimentaire et inadapté aux terrains difficiles, comportant un plateau tournant de faible diamètre et libre en rotation, l'opérateur s'appuie par ses pieds sur le châssis pour faire pivoter le plateau tournant [43], qui doit donc être de dimensions réduites.

Dans un deuxième mode d'exécution comportant un plateau tournant entraîné en rotation, l'opérateur peut commander le pivotement de celui-ci à l'aide d'une commande manuelle, par exemple.

Dans un troisième mode préférentiel d'exécution dont des vues partielles sont représentés en particulier par les Figures 7 et 8, le plateau tournant [43] est de grand diamètre, suffisant pour que les pieds de l'opérateur y soient fixés.

Lorsque l'opérateur tend instinctivement à se tourner vers une direction autre qu'en alignement avec le plan du bras de soutien [44] et du mât élévateur coulissant [45], il effectue un mouvement du torse vers la direction souhaitée. Dans ce cas, la ceinture [35] pivote légèrement, décalant les pivots [52] et [53] de leur position de repos. En référence à la Figure 7, l'ensemble ressort-amortisseur [62] se comprime et se détend, ou l'inverse suivant la direction de pivotement de la ceinture [35]. La bague [66] entre alors en contact avec la butée [67] ou [68] suivant la direction de pivotement, ce qui entraîne en rotation le plateau tournant dans la même direction, faisant ainsi pivoter l'ensemble mobile. Lorsque l'opérateur a atteint la position souhaitée, il cesse instinctivement la rotation du torse. Les ensembles ressorts-amortisseurs [62] et [63] ramènent alors les pivots [52] et [53] en position de repos, ce qui isole la bague [66] des butées [66] et [67], arrêtant ainsi la rotation du plateau tournant [43].

Lorsque les butées [66] et [67] sont des capteurs de pression, la rotation du plateau tournant est plus progressive, ce qui a pour effet d'éviter des à-coups lors du pivotement de l'ensemble mobile.

L'opérateur peut à tout moment choisir son élévation relative au châssis [11] à l'aide d'une commande appropriée, manuelle par exemple, du mât élévateur coulissant [45]. Comme précisé, la course du mât élévateur coulissant [45] s'étend entre une position basse ou l'opérateur est en flexion complète des genoux et une position haute ou les jambes de l'opérateur sont totalement étendues, mais ses pieds restant en tous cas en contact avec le châssis [11] ou avec le plateau tournant [43] selon la variante d'exécution choisie.

Les deux modes de réalisation de l'invention décrits l'ont été à titre d'exemples non limitatifs. Il appartient à l'homme de l'art d'envisager tous les modes de réalisation dans le cadre de l'invention, telle que définie par les Revendications.

## Revendications

1. Véhicule automobile (10) comportant :
- un châssis suspendu (11),
- un ensemble mobile comportant un harnais (35, 36, 37) adapté à recevoir un opérateur (2) de prises de vues, un dispositif (41) de prises de vues et un support (39) pour ce dispositif de prise de vues, et
- des moyens de soutien (25, 27, 28, 30, 31, 32, 32', 34 ; 43, 46, 47, 48, 49, 52, 53) pour relier l'ensemble mobile au châssis, comportant des moyens (28, 30, 32, 32', 34 ; 43) de pivotement autour d'un axe vertical,
ce véhicule étant caractérisé en ce que les moyens de soutien comportent un élément intermédiaire (25 ; 47) sensiblement vertical auquel l'ensemble mobile est suspendu par des moyens de suspension (27, 28, 30, 31, 32, 32' ; 48, 49, 52, 53) autorisant un débattement pendulaire suivant deux directions sensiblement horizontales et sensiblement orthogonales entre-elles, et en ce que les moyens de pivotement sont commandés indépendamment de la position du châssis.

2. Véhicule automobile selon la revendication 1, caractérisé en ce les moyens de suspension ont des axes instantanés horizontaux (28, 30, 32, 32' ; 48, 52, 53) de basculement pendulaire situés à des niveaux supérieurs au niveau du centre de gravité de l'ensemble mobile lorsqu'un opérateur prédéterminé est placé dans le harnais.

3. Véhicule automobile selon la revendication 1 ou la revendication, caractérisé en ce que les moyens de soutien comportant des moyens de réglage en hauteur (22, 23 ; 46, 47) adaptés à commander la position en hauteur de l'élément intermédiaire (25, 47) par rapport au châssis.

4. Véhicule automobile selon la revendication 3, caractérisé en ce que les moyens de réglage en hauteur (22, 23 ; 46, 47) ont une course telle que la position en hauteur de l'élément intermédiaire varie entre une configuration haute dans laquelle l'opérateur est sensiblement debout et une configuration basse où l'opérateur est à genoux, le véhicule comportant pour le bas du corps de l'opérateur des zones d'appui (29, 29', 11) fixes en hauteur par rapport au châssis.

5. Véhicule automobile selon la revendication 4, caractérisé en ce que les moyens de réglage en hauteur comportent un mât élévateur (22, 23 ; 46, 47) vis-à-vis duquel le harnais est disposé en sorte que l'opérateur soit dos à ce mât.

6. Véhicule automobile selon l'une quelconque des revendications 1 à 5, caractérisé en ce que le harnais comporte des moyens (36, 37) de réglage en hauteur.

7. Véhicule automobile selon l'une quelconque des revendications 1 à 6, caractérisé en ce que lesdits moyens de soutien comportent des moyens amortisseurs (28, 30, 32, 32' ; 45, 47) entre le châssis et l'ensemble mobile.

8. Véhicule automobile selon l'une quelconque des revendications 1 à 7, caractérisé en ce que le harnais comporte une ceinture rigide (35) pouvant enserrer l'opérateur (2) de prises de vues et comportant au moins une zone (38) de fixation du support (39) du dispositif de prises de vues.

9. Véhicule automobile selon la revendication 8, caractérisé en ce que les moyens de soutien sont constitués :
- d'une potence (26) en L renversé comportant un mât élévateur (22) commandable de façon continue par l'opérateur de prises de vues (2) positionné globalement le dos au mât et une branche supérieure (25) disposée longitudinalement vers l'extérieur du châssis,
- d'une sous-potence (27) en L renversé reliée à la potence par des moyens amortissants (28, 30, 32, 32') permettant à la fois un mouvement pendulaire longitudinal et un mouvement pendulaire latéral de la sous-potence par rapport à la potence,
- d'un moyen charnière (35') reliant la ceinture rigide du harnais à la branche verticale de la sous-potence avec un débattement limité autour d'un axe vertical.

10. Véhicule automobile selon la revendication 8, caractérisé en ce que les moyens amortissants comportent un bloc amortissant (28) assurant en une zone unique la suspension de la branche horizontale de la sous-potence (27) sous la branche horizontale (25) de la potence principale, et de blocs amortissants inférieurs (30, 32, 32') interposés entre les branches verticales de la sous-potence (27) et de la potence verticale (26).

11. Véhicule automobile selon la revendication 10, caractérisé en ce que les blocs amortissants inférieurs comportent un étrier horizontal (31), deux blocs amortissants (32, 32') disposés latéralement entre les branches longitudinales de l'étrier de part et d'autre de la branche verticale de la potence verticale (26) et un bloc amortissant (30) interposé longitudinalement entre l'étrier et la branche verticale de la sous-potence.

12. Véhicule automobile selon la revendication 8, caractérisé en ce que les moyens de soutien comportent :
- une potence pivotante en L (46) formée d'une branche horizontale inférieure (44) connectée au châssis par un moyen pivotant (43) d'axe vertical commandable de façon continue et d'une branche verticale excentrée par rapport à ce moyen pivotant,
- un mât élévateur (45) faisant partie de cette branche verticale et comportant une partie mobile verticale,
- une liaison en cardan (45, 48, 50, 51, 52, 53) à deux axes horizontaux reliant la ceinture rigide à la partie mobile du mât élévateur (45).

13. Véhicule automobile selon la revendication 12, caractérisé en ce que la liaison en cardan comporte une fourche horizontale comportant une portion centrale connectée à la partie mobile par un pivot (48) d'axe horizontal parallèle à la potence, et deux bras coudés (50, 51) s'étendant parallèlement à la branche inférieure (44) de la potence pivotante et reliés à la ceinture rigide par deux points coaxiaux (52, 53) d'axe horizontal transversal.

14. Véhicule automobile selon la revendication 13, caractérisé en ce que des moyens de détection (56, 57, 58, 60, 62, 63) sont prévus auprès desdits pivots coaxiaux en sorte de détecter la position angulaire de la ceinture rigide par rapport à la fourche, commandée par des mouvements de torsion du buste de l'opérateur, ces moyens de détection étant connectés à des moyens de commande contrôlant la rotation du moyen pivotant (43) de la potence pivotante.

15. Véhicule automobile selon la revendication 14, caractérisé en ce que ces moyens de détection comportent des fentes horizontales (58, 60) recevant les pivots (56, 57) d'axe transversal, et des détecteurs (62,63) détectant la position de ces pivots dans ces fentes.

16. Véhicule automobile selon l'une quelconque des revendications 1 à 15, caractérisé en ce qu'il comporte au moins deux embases (21, 21', 42, 42') alignées dans le sens de la marche dudit véhicule, chacune desdites embases étant apte à recevoir lesdits moyens de soutien.

17. Véhicule automobile selon l'une quelconque des revendications 1 à 16, caractérisé en ce que ledit support (39) de dispositif de prises de vues est un bras articulé comportant au moins un parallélogramme déformable.

18. Véhicule automobile selon l'une quelconque des revendications 1 à 17, caractérisé en ce que ledit support (39) comprend au moins une paire de bras reliés entre eux de façon pivotante, des moyens d'accouplement en rotation d'une extrémité desdits bras à un support, des moyens permettant de relier à un poids l'autre extrémité desdits bras et des moyens élastiques prévus sur chacun des bras destinés à compenser le poids appliqué à l'extrémité de chacun de ces bras.

## Patentansprüche

1. Kraftfahrzeug (10) mit
- einem aufgehängten Rahmen (11),
- einer beweglichen Einheit mit einem Aufnahmegeschirr (35, 36, 37), das darauf eingerichtet ist, einen Kameramann (2), eine Bildaufnahmevorrichtung (41) und einen Träger (39) für diese Bildaufnahmevorrichtung aufzunehmen, sowie mit - Tragmitteln (25, 27, 28, 30, 31, 32, 32', 34; 43, 46, 47, 48, 49, 52, 53) zum Verbinden der beweglichen Einheit mit dem Rahmen, wobei die Tragmittel Mittel (28, 30, 32, 32', 34; 43) zum Verschwenken um eine vertikale Achse aufweisen,
und wobei dieses Fahrzeug **dadurch gekennzeichnet** ist, daß die Tragmittel ein Zwischenelement (25; 47) umfassen, an dem die bewegliche Einheit durch Aufhängungsmittel (27, 28, 30, 31, 32, 32'; 48, 49, 52, 53) im wesentlichen vertikal aufgehängt ist, wobei diese Aufhängungsmittel ein pendelndes Verschwenken in zwei im wesentlichen horizontalen und zueinander im wesentlichen senkrechten Richtungen gestatten, und daß die Mittel zum Verschwenken unabhängig von der Position des Rahmens gesteuert werden.

2. Kraftfahrzeug nach Anspruch 1, dadurch gekennzeichnet, daß die Aufhängungsmittel horizontale Momentanachsen (28, 30, 32, 32'; 48, 52, 53) zum pendelnden Verschwenken aufweisen, welche sich auf höheren Lagen als die Lage des Schwerpunktes der beweglichen Einheit befinden, wenn eine vorbestimmte Bedienungsperson in das Aufnahmegeschirr gesetzt wird.

3. Kraftfahrzeug nach Anspruch 1 oder Anspruch 2, dadurch gekennzeichnet, daß die Tragmittel Mittel (22, 23; 46, 47) zur Höheneinstellung aufweisen, welche darauf eingerichtet sind, die Höhenlage des Zwischenelements (25, 47) relativ zum Rahmen zu steuern.

4. Kraftfahrzeug nach Anspruch 3, dadurch gekennzeichnet, daß die Mittel (22, 23; 46, 47) zur Höheneinstellung einen derartigen Verfahrweg haben, daß die Höhenlage des Zwischenelements zwischen einer hohen Anordnung, in welcher die Bedienungsperson im wesentlichen aufrecht steht, und einer niedrigen Anordnung, in welcher sich die Bedienungsperson auf den Knien befindet, variiert, wobei das Fahrzeug für den Unterkörper der Bedienungsperson Abstützzonen (29, 29', 11) aufweist, deren Höhe bezüglich des Rahmens fest ist.

5. Kraftfahrzeug nach Anspruch 4, dadurch gekennzeichnet, daß die Mittel zur Höheneinstellung einen Hebemast (22, 23; 46, 47) aufweisen, demgegenüber das Aufnahmegeschirr derart angeordnet ist, daß sich die Bedienungsperson mit dem Rücken zu diesem Mast befindet.

6. Kraftfahrzeug nach einem der Ansprüche 1 bis 5, dadurch gekennzeichnet, daß das Aufnahmegeschirr Mittel (36, 37) zur Höheneinstellung aufweist.

7. Kraftfahrzeug nach einem der Ansprüche 1 bis 6, dadurch gekennzeichnet, daß die Tragmittel Dämpfungsmittel (28, 30, 32, 32'; 45, 47) zwischen dem Rahmen und der beweglichen Einheit aufweisen.

8. Kraftfahrzeug nach einem der Ansprüche 1 bis 7, dadurch gekennzeichnet, daß das Aufnahmegeschirr einen starren Gurt (35), welcher den Kameramann (2) umschließen kann, und mindestens einen Bereich (38) zur Befestigung des Trägers (39) für die Bildaufnahmevorrichtung aufweist.

9. Kraftfahrzeug nach Anspruch 8, dadurch gekennzeichnet, daß die Tragmittel sich aus folgendem zusammensetzen:
- einem Arm (26) in Form eines auf den Kopf gestellten L, mit einem Hebemast (22), welcher kontinuierlich vom Kameramann (2), der sich im allgemeinen mit dem Rücken zum Mast befindet, steuerbar ist, und mit einem oberen Abschnitt (25), der in Längsrichtung zu der Außenseite des Rahmens hin angeordnet ist,
- einem unteren Arm (27) in Form eines auf den Kopf gestellten L, der mit dem Arm über Dämpfungsmittel (28, 30, 32, 32') verbunden ist, welche gleichzeitig eine pendelnde Längsbewegung und eine pendelnde seitliche Bewegung des unteren Arms relativ zu dem Arm gestatten,
- einem Scharniermittel (35'), welches den starren Gurt des Aufnahmegeschirrs mit dem vertikalen Abschnitt des unteren Arms mit einer begrenzten Verschwenkbarkeit um eine vertikale Achse verbindet.

10. Kraftfahrzeug nach Anspruch 8, dadurch gekennzeichnet, daß die Dämpfungsmittel einen Dämpfungsblock (28), welcher in einem einzigen Bereich die Aufhängung des horizontalen Abschnitts des unteren Arms (27) unter dem horizontalen Abschnitt (25) des Hauptarms sicherstellt, sowie untere Dämpfungsblöcke (30, 32, 32') aufweisen, die zwischen die vertikalen Abschnitte des unteren Arms (27) und des vertikalen Arms (26) zwischengeschaltet sind.

11. Kraftfahrzeug nach Anspruch 10, dadurch gekennzeichnet, daß die unteren Dämpfungsblöcke einen horizontalen Bügel (31), zwei Dämpfungsblöcke (32, 32'), welche seitlich zwischen den Längsabschnitten dieses Bügels auf beiden Seiten des vertikalen Abschnitts des vertikalen Arms (26) angebracht sind, und einen Dämpfungsblock (30) aufweisen, der in Längsrichtung zwischen den Bügel und den vertikalen Abschnitt des unteren Arms zwischengeschaltet ist.

12. Kraftfahrzeug nach Anspruch 8, dadurch gekennzeichnet, daß die Tragmittel folgendes aufweisen:
- einen verschwenkbaren Arm in L-Form (46), der durch einen unteren horizontalen Abschnitt (44), welcher mit dem Rahmen über ein um eine vertikale Achse verschwenkbares, kontinuierlich steuerbares Mittel (43) verbunden ist, und durch einen bezüglich diesem verschwenkbaren Mittel exzentrischen vertikalen Abschnitt gebildet wird,
- einen Hebemast (45), der Teil dieses vertikalen Abschnitts ist und einen beweglichen vertikalen Bereich aufweist,
- eine Kardanverbindung (45, 48, 50, 51, 52, 53) mit zwei horizonalen Achsen, welche den starren Gurt mit dem beweglichen Bereich des Hebemasts (45) verbinden.

13. Kraftfahrzeug nach Anspruch 12, dadurch gekennzeichnet, daß die Kardanverbindung eine horizontale Gabel mit einem zentralen Bereich, welcher mit dem beweglichen Bereich über einen Drehzapfen (48) mit einer zum Arm parallelen Horizontalachse verbunden ist, sowie zwei abgewinkelte Arme (50, 51) aufweist, welche parallel zum unteren Abschnitt (44) des verschwenkbaren Arms verlaufen und mit dem starren Gurt über zwei koaxiale Punkte (52, 53) mit horizontaler Querachse verbunden sind.

14. Kraftfahrzeug nach Anspruch 13, dadurch gekennzeichnet, daß Detektionsmittel (56, 57, 58, 60, 62, 63) bei den koaxialen Drehzapfen derart vorgesehen sind, daß sie die Winkellage des starren Gurtes relativ zur Gabel detektieren, die über Drehbewegungen des Oberkörpers der Bedienungsperson gesteuert wird, wobei diese Detektionsmittel mit Steuerungsmitteln verbunden sind, welche die Drehung des verschwenkbaren Mittels (43) des verschwenkbaren Arms steuern.

15. Kraftfahrzeug nach Anspruch 14, dadurch gekennzeichnet, daß diese Detektionsmittel horizontale Schlitze (58, 60), welche die Drehzapfen (56, 57) mit Querachse aufnehmen. sowie Detektoren (62, 63) aufweisen, welche die Position dieser Drehzapfen in den Schlitzen detektieren.

16. Kraftfahrzeug nach einem der Ansprüche 1 bis 15, dadurch gekennzeichnet, daß es mindestens zwei Grundplatten (21, 21', 42, 42') aufweist, welche in der Bewegungsrichtung des Fahrzeugs ausgerichtet sind, wobei jede dieser Grundplatten die Tragmittel aufnehmen kann.

17. Kraftfahrzeug nach einem der Ansprüche 1 bis 16, dadurch gekennzeichnet, daß der Träger (39) der Bildaufnahmevorrichtung ein verschwenkbarer Arm ist, der mindestens ein verformbares Parallelogramm aufweist.

18. Kraftfahrzeug nach einem der Ansprüche 1 bis 17, dadurch gekennzeichnet, daß der Träger (39) mindestens ein Paar Arme, die miteinander verschwenkbar verbunden sind, Mittel zur Drehankopplung eines Endes der Arme an einen Träger, Mittel, die es gestatten, das andere Ende der Arme mit einem Gewicht zu verbinden, sowie elastische Mittel aufweist, die auf jedem der Arme zur Kompensation des am Ende jeden Armes befestigten Gewichts vorgesehen sind.

## Claims

1. Automobile vehicle (10) including:
- a suspended chassis (11),
- a mobile assembly including a harness (35, 36, 37) adapted to receive a shooting operator (2), a shooting device (41) and a support (39) for said shooting device, and
- support means (25, 27, 28, 30, 31, 32, 32', 34; 43, 46, 47, 48, 49, 52, 53) for coupling the mobile assembly to the chassis, including means (28, 30, 32, 32', 34; 43) pivoting about a vertical axis,
said vehicle being characterised in that the support means include a substantially vertical intermediate member (25; 47) from which the mobile assembly is suspended by suspension means (27, 28, 30, 31, 32, 32'; 48, 49, 52, 53) enabling pendular relative movement in two substantially horizontal and substantially mutual orthogonal directions, and in that the pivoting means are controlled independently of the position of the chassis.

2. Automobile vehicle according to claim 1 characterised in that the suspension means have instantaneously horizontal pendular tilt axes (28, 30, 32, 32'; 48, 52, 53) at levels higher than the level of the centre of gravity of the mobile assembly when a predetermined operator is in the harness.

3. Automobile vehicle according to claim 1 or claim 2 characterised in that the support means include height adjustment means (22, 23; 46, 47) adapted to control the heightwise position of the intermediate member (25, 47) relative to the chassis.

4. Automobile vehicle according to claim 3 characterised in that the height adjustment means (22, 23; 46, 47) have a travel such that the heightwise position of the intermediate member varies between a high configuration in which the operator is substantially standing and a low configuration in which the operator is kneeling, the vehicle having bearing areas (29, 29', 11) for the lower part of the body of the operator fixed in height relative to the chassis.

5. Automobile vehicle according to claim 4 characterised in that the height adjustment means include an elevator post (22, 23; 46, 47) vis à vis which the harness is disposed so that the operator has his or her back to the post.

6. Automobile vehicle according to any one of claims 1 to 5 characterised in that the harness includes height adjustment means (36, 37).

7. Automobile vehicle according to any one of claims 1 to 6 characterised in that said support means include damper means (28, 30, 32, 32'; 45, 47) between the chassis and the mobile assembly.

8. Automobile vehicle according to any one of claims 1 to 7 characterised in that the harness includes a rigid belt (35) that can be placed around the shooting operator (2) and having at least one area (38) for fixing the support (39) for the shooting device.

9. Automobile vehicle according to claim 8 characterised in that the support means comprise:
- an inverted L-shape gibbet (26) including an elevator post (22) controllable continuously by the shooting operator (2) positioned with his or her back to the post and an upper branch (25) disposed longitudinally towards the exterior of the chassis,
- an inverted L-shape sub-gibbet (27) coupled to the gibbet by damper means (28, 30, 32, 32') enabling simultaneous longitudinal pendular movement and lateral pendular movement of the sub-gibbet relative to the gibbet,
- hinge means (35') coupling the rigid belt of the harness to the vertical branch of the sub-gibbet with limited relative movement about a vertical axis.

10. Automobile vehicle according to claim 8 characterised in that the damper means include a damper block (28) assuring in a single area the suspension of the horizontal branch of the sub-gibbet (27) under the horizontal branch (25) of the main gibbet and bottom damper blocks (30, 32, 32') disposed between the vertical branches of the sub-gibbet (27) and the vertical gibbet (26).

11. Automobile vehicle according to claim 10 characterised in that the bottom damper blocks include a horizontal bracket (31), two damper blocks (32, 32') disposed laterally between the longitudinal branches of the bracket on respective opposite sides of the vertical branch of the vertical gibbet (26) and a damper block (30) disposed longitudinally between the bracket and the vertical branch of the sub-gibbet.

12. Automobile vehicle according to claim 8 characterised in that the support means include:
- an L-shape pivoting gibbet (46) formed of a bottom horizontal branch (44) connected to the chassis by vertical axis pivot means (43) controllable continuously and a vertical branch off-centre relative to said pivoting means,
- an elevator post (45) forming part of said vertical branch and including a vertical mobile part,
- a gimbal coupling (45, 48, 50, 51, 52, 53) with two horizontal axes coupling the rigid belt to the mobile part of the elevator post (45).

13. Automobile vehicle according to claim 12 characterised in the gimbal coupling includes a horizontal fork including a central portion connected to the mobile part by a horizontal axis pivot (48) parallel to the gibbet and two cranked arms (50, 51) parallel to the bottom branch (44) of the pivoting gibbet and coupled to the rigid belt at two coaxial points (52, 53) with transverse horizontal axes.

14. Automobile vehicle according to claim 13 characterised in that detector means (56, 57, 58, 60, 62, 63) are provided at said coaxial pivots to detect the angular position of the rigid belt relative to the fork, controlled by torsional movements of the chest of the operator, said detector means being connected to control means for controlling rotation of the pivot means (43) of the pivoting gibbet.

15. Automobile vehicle according to claim 14 characterised in that said detector means include horizontal slots (58, 60) receiving the transverse axis pivots (56, 57) and detectors (62, 63) detecting the position of said pivots in said slots.

16. Automobile vehicle according to any one of claims 1 to 15 characterised in that it comprises at least two bases (21, 21', 42, 42') aligned with the direction of movement of said vehicle, each of said bases being adapted to receive said support means.

17. Automobile vehicle according to any one of claims 1 to 16 characterised in that said shooting device support (39) is an articulated arm comprising at least one deformable parallelogram.

18. Automobile vehicle according to any one of claims 1 to 17 characterised in that said support (39) comprises at least one pair of arms pivoted together, means for rotationally coupling one end of said arms to a support, means for coupling a weight to the other end of said arms and spring means provided on each arm adapted to compensate the weight applied to the end of each arm.
